(19) Europäisches Patentamt
European Patent Office
Office européen des brevets

(11) Veröffentlichungsnummer: **0 314 091 B1**

(12) **EUROPÄISCHE PATENTSCHRIFT**

(45) Veröffentlichungstag der Patentschrift: **22.04.92**

(51) Int. Cl.5: **G01N 13/04**, G01N 7/10

(21) Anmeldenummer: **88117815.6**

(22) Anmeldetag: **26.10.88**

(54) **Verfahren und Einrichtung zur selektiven Bestimmung des Gehaltes eines in einem Lösungsmittel gelösten Stoffes.**

(30) Priorität: **27.10.87 DE 3736230**

(43) Veröffentlichungstag der Anmeldung:
**03.05.89 Patentblatt 89/18**

(45) Bekanntmachung des Hinweises auf die Patenterteilung:
**22.04.92 Patentblatt 92/17**

(84) Benannte Vertragsstaaten:
**CH FR GB LI SE**

(56) Entgegenhaltungen:
**EP-A- 0 183 072**
**GB-A- 1 029 951**

(73) Patentinhaber: **Forschungszentrum Jülich GmbH**
**Postfach 1913**
**W-5170 Jülich(DE)**

(72) Erfinder: **Steudle, Ernst, Prof. Dr.**
**Dorotheenstrasse 3**
**W-8581 Eckersdorf(DE)**
Erfinder: **Böling, Gerd**
**Bonsdorfer Strasse 2**
**W-5176 Inden(DE)**
Erfinder: **Zillikens, Josef**
**Artilleriestrasse 44**
**W-5170 Jülich(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die Erfindung bezieht sich auf ein Verfahren zur selektiven Bestimmung des Gehaltes eines in einem Lösungsmittel gelösten Stoffes (A) mittels einer eine starre Wandung aufweisenden osmotischen Zelle mit Druckmeßeinrichtung zur Messung des hydrostatischen Druckes in der osmotischen Zelle und mit einer für den Stoff durchlässigen Membran, über die die in der osmotischen Zelle befindliche Osmometerlösung mit der auf den Gehalt des Stoffes zu untersuchenden Lösung in Verbindung gebracht wird, wobei zunächst unter Verwendung einer, mit der Osmometerlösung über die Membran in Verbindung gebrachten Bezugslösung ein Arbeitsdruck $P_O$ eingestellt wird, worauf nach Austausch der Bezugslösung durch die zu untersuchende Lösung aus dem sich hierauf in der osmotischen Zelle einstellenden Druckverlauf der Gehalt des permeablen Stoffes (A) in der zu untersuchenden Lösung bestimmt wird. Die Erfindung bezieht sich ferner auf Einrichtungen zur Durchführung des Verfahrens.

Aus der DE-OS 35 25 668 sind Verfahren bekannt, nach denen unter Verwendung einer osmotischen Zelle der eingangs bezeichneten Art der Gehalt von in einer zu untersuchenden Lösung befindlichen Stoffen aus dem sich in der osmotischen Zelle einstellende Druckverlauf bestimmt wird.

Die verwendete osmotische Zelle besitzt eine starre Wandung und eine starre Membran, so daß während der Durchführung des Verfahrens die Änderung des Volumens der osmotischen Zelle sehr klein ist.

Die bekannten Verfahren erlauben zwar die Bestimmung des Gehaltes eines Stoffes in einer Lösung, wenn sich zwei oder mehr Stoffe in der Lösung befinden. Hierzu ist jedoch die Auswertung zumindest eines großen Teiles des sich nach dem Austausch der Lösungen einstellenden Druckverlaufes bis zum Enddruck oder die Verwendung zweier osmotischer Zellen mit unterschiedlichen Membranen erforderlich.

Es ist Aufgabe der Erfindung, ein Verfahren zur Bestimmung des Gehaltes eines in einem Lösungsmittel gelösten Stoffes zu schaffen, das eine selektive Bestimmung des Gehaltes dieses Stoffes ermöglicht.

Diese Aufgabe wird bei einem Verfahren der eingangs bezeichneten Art durch die Verfahrensmerkmale des Anspruchs 1 gelöst.

Die Membran der Zelle soll dabei für den zu bestimmenden Stoff A (bzw. für G) möglichst permeabel sein (Reflektionskoeffizient $\sigma \ll 1$; Geschwindigkeitskonstante $k_s$ groß), während sie für die Reaktionsprodukte sowohl möglichst impermeabel ($\sigma \simeq 1$; $k_s$ klein) als auch möglichst permeabel sein kann. Im ersten Fall wird eine Druckerhöhung, im zweiten Fall eine Druckerniedrigung gemessen. In jedem Fall muß jedoch gewährleistet sein, daß der Membrandurchtritt und nicht etwa die vor- bzw. nachgeschaltete chemische Reaktion geschwindigkeitsbestimmend ist.

Da die gemessene Druckänderung in der osmotischen Zelle im wesentlichen durch Wasserverschiebungen zwischen der Lösung und der Zelle bewirkt wird, muß auch die Geschwindigkeitskonstante, $K_w$, für den Wasseraustausch hinreichend groß sein.

Weiterhin sollen die Zeitkonstanten für die Mischungsprozesse in der osmotischen Zelle und in der Lösung außerhalb klein sein gegenüber derjenigen für den Wasseraustausch der osmotischen Zelle. Das ist dann der Fall, wenn der $K_w$-Wert der osmotischen Zelle:

$$K_w = \frac{A_o}{V_o} \cdot Lp \cdot (\varepsilon + \tilde{\pi}_o^{\,i})$$

mit
$A_o$ die effektive Oberfläche der Membran,
$V_o$ das Volumen der osmotischen Zelle,
$L_p$ die hydraulische Leitfähigkeit der Membran
$\epsilon$ der Volumenelastizitätsmodul der osmotischen Zelle und
$\pi_o^i$ = osmotischer Druck in der Zelle
hinreichend groß ist. Dies kann, da es sich bei den Faktoren

$$\frac{A_o}{V_o}$$

Lp und um $\epsilon$ um konstruktionsspezifische Größen einer osmotischen Zelle bzw. deren Membran handelt, durch die Wahl einer geeigneten osmotischen Zelle geschehen. Andererseits soll der anfänglich lineare Verlauf der Druck/Zeit-Kurve, der sich infolge einer Konzentrationsänderung einstellt, verglichen mit der Dauer der Mischphase, die sich beim Austausch zweier Lösungen im Meßsystem einstellt, hinreichend lang sein.

Das Verfahren gemäß der Erfindung ist im wesentlichen dadurch gekennzeichnet, daß die effektive osmotische Konzentration in der osmotischen Zelle als Folge der chemischen Reaktion des zu bestimmenden Stoffes A (oder eines Produktes hiervon) mit einem praktisch impermeablen Osmotikum B im Osmometer verändert wird, wobei B als gelöster Stoff oder als Feststoff (Bodenkörper) mit bestimmter Löslichkeit vorliegen kann. Die Änderung der osmotischen Konzentration in der Zelle bewirkt Wasserflüsse durch die Membran, die zu Druckänderungen führen. Diese wiederum sind ein Maß für die Konzentration des Stoffes A in der zu untersuchenden Lösung. Dabei wird zweckmäßigerweise so verfahren, daß nach Austausch der Bezugslösung durch die zu untersuchende Lösung die Anfangsneigung $(\frac{dP}{dt})t = 0$ der die Druckänderung in der osmotischen Zelle wiedergebenden Druck/Zeit-Kurve ermittelt wird.

Die Druckänderungen in der osmotischen Zelle können dadurch bewirkt werden, daß sich die Summe der osmotischen Konzentrationen $C_i$ der Reaktionsprodukte $C_i$ unter Einbeziehung ihrer Reflektionskoeffizienten $\sigma_i$, d.h. $\Sigma\ \sigma_i C_i$, hinreichend von der des Osmotikums B im Ausgangszustand unterscheiden. Dabei kann sowohl eine Druckzunahme als auch eine Druckabnahme zu verzeichnen sein. Die Druckänderungen können zum Beispiel dadurch bewirkt werden, daß die Reaktionsprodukte permeabel sind und rasch durch die Membran die Zelle verlassen, so daß die osmotische Konzentration infolge des Verbrauchs des Osmotikums B (der Substanz B) in der Zelle kontinuierlich abnimmt. Sie können auch dadurch bewirkt werden, daß ein praktisch unlöslicher Feststoff im Osmometer aufgelöst wird und impermeable Produkte entstehen, was eine Druckerhöhung bewirkt.

Um den Gehalt des Stoffes A in der zu untersuchenden Lösung möglichst genau bestimmen zu können, sollte die Substanz B möglichst selektiv mit dem Stoff A reagieren. Allerdings kann es sich dabei auch um eine komplexe Reaktion handeln, bei der anstelle nur einer Substanz B zwei (oder mehr) Substanzen zusammenwirken und in der Reaktion mit dem Stoff A Reaktionsprodukte erzeugen. Entscheidend ist, daß in der osmotischen Zelle eine Druckänderung erzeugt wird, die ein Maß für die Konzentration des Stoffes A in der zu untersuchenden Lösung ist. Wichtig ist dabei, daß der Membrandurchtritt und nicht die vor- oder nachgeschalteten chemischen Reaktionen die Geschwindigkeit des gesamten Prozesses bestimmen.

Zur genauen Bestimmung des Stoffes A ist es gegebenenfalls erforderlich, durch Wahl der Membran dafür zu sorgen, daß andere in der zu untersuchenden Lösung enthaltene Stoffe nicht (bzw. in der für die Untersuchung vorgesehenen Zeit nicht merkbar) in die osmotische Zelle gelangen. Auch kann es erforderlich sein, andere störende Stoffe beispielsweise durch eine chemische Behandlung (Ausfällung) aus der zu untersuchenden Lösung vorab zu entfernen. Zudem soll zur genauen Bestimmung des Stoffes A der Gehalt dieses Stoffes in der zu untersuchenden Lösung nur so hoch sein, daß der nach dem Austausch der Bezugslösung gegen die zu untersuchende Lösung in die osmotische Zelle gelangende Anteil des Stoffes A oder der daraus entstehenden Produkte G, H schnell chemisch umgesetzt wird und sich der in der Zelle einstellende Druckverlauf allein aus dem Unterschied der osmotischen Drucke des verbrauchten Anteils der Substanz B und der entstehenden Reaktionsprodukte C, D, E ergibt. Außerdem sollte die Substanz B so ausgewählt sein, daß die Permeation des Stoffes A, d.h. dessen Membrandurchtritt für die Druckänderung geschwindigkeitsbestimmend ist.

Unter Vermeidung von störenden Einflüssen ist das Verfahren gemäß der Erfindung auch einsetzbar zur Bestimmung von Spurenstoffen A, die in der Lösung in einer Konzentration von unterhalb von $10^{-3}$ M vorliegen.

Zur Ermittlung von Eichkurven werden Lösungen mit bekannten Konzentrationen des Stoffes A eingesetzt, wobei durch andere Stoffe bedingte Störungen vermieden werden. Dabei kann die vorgesehene Bestimmung des Stoffes A auf ihre Genauigkeit hin dadurch überprüft werden, daß als Eichlösungen Lösungen verwendet werden, die zusätzlich die anderen in der zu untersuchenden Lösung befindlichen Stoffe in den vorgesehenen Konzentrationen enthalten.

Eine Lösung, die bis auf den Stoff A alle in der zu untersuchenden Lösung befindlichen Stoffe in der vorgesehenen Konzentration enthält, wird zweckmäßigerweise als Bezugslösung zur Einstellung des Arbeitsdruckes $P_O$ verwendet. Hierdurch heben sich die osmotischen Effekte der Begleitsubstanzen in der zu untersuchenden Lösung auf.

Wird eine Substanz B verwendet, die in der osmotischen Zelle als Feststoff von nur geringer Löslichkeit vorliegt, dann ist der Arbeitsdruck $P_O$ gleich Null. Ist ein hiervon abweichender Arbeitsdruck erwünscht, so kann dies durch ein der Osmometerlösung zugesetztes, nicht an der Reaktion teilnehmendes impermeables

Osmotikum erreicht werden.

Fur die Durchführung des Verfahrens gemäß der Erfindung lassen sich verschiedene Fälle unterscheiden.

Der einfachste Fall besteht darin, daß der Stoff A in die osmotische Zelle gelangt und dort mit der Substanz B reagiert. Bezeichnet man die in der zu untersuchenden Lösung befindlichen Stoffe mit L und die in der osmotischen Zelle befindlichen Stoffe mit Z, so läßt sich dieser einfache Fall wie folgt darstellen:

$$A^L \xrightarrow{\text{Membran}} A^Z + B^Z .$$

Dies führt zu

$A^Z + B^Z \rightarrow$ Reaktionsprodukte (z. B. $C^Z$; $D^Z$; $E^Z$).

Ein praktisches Beispiel hierfür ist die Bestimmung von permeablem Schwefelwasserstoff ($H_2S$) mit Hilfe von Quecksilber (II)-cyanid ($Hg(CN)_2$)
als impermeabler Substanz B:

$$\underset{(A^L)}{H_2S} \xrightarrow{\text{Membran}} \underset{(A^Z)}{H_2S} + \underset{(B^Z)}{Hg\,(CN)_2} .$$

$H_2S$ permeiert leicht in die osmotische Zelle.
$Hg(CN)_2$ liegt in der Osmometerlösung praktisch undissoziiert vor.

Das in der Reaktion:

$$\underset{(A^Z)}{H_2S} + \underset{(B^Z)}{Hg(CN)_2} \longrightarrow \underset{(C^Z)}{HgS} + \underset{(D^Z)}{2HCN} .$$

gebildete HgS fällt aus, während die entstehende Blausäure (HCN) bei hinreichend saurem pH-Wert die osmotische Zelle rasch verläßt. Dadurch entsteht in der osmotischen Zelle eine meßbare Druckabnahme.

Quecksilber (II)-Cyanid reagiert auf viele Reagenzien für $Hg^{2+}$-Ionen nicht. Die Reaktion ist somit weitgehend selektiv für Schwefelwasserstoff.

Ein weiteres praktisches Beispiel für den einfachen Fall ist die Bestimmung von Ammoniak ($NH_3$) unter Verwendung von schwer löslichem Silberchlorid (AgCl) als Substanz B:

$$\underset{(A^L)}{2\ NH_3} \xrightarrow{\text{Membran}} \underset{(A^Z)}{2\ NH_3} + \underset{(B^Z)}{AgCl}$$

Nach der Beziehung:

$$\underset{(A^Z)}{2\ NH_3} + \underset{(B^Z)}{AgCl} \longrightarrow \underset{(C^Z)}{Ag(NH_3)_2^{\ +}} + \underset{(D^Z)}{Cl^-}$$

entsteht für jedes aufgenommene $NH_3$-Molekül ein osmotisch wirksames Ion in der osmotischen Zelle.

Es läßt sich zeigen, daß die Empfindlichkeit des Nachweises des komplexbildenden Agens (hier: $NH_3$) vom Löslichkeitsprodukt des unlöslichen Salzes (B) abhängt. Schwer lösliche Salze (z. B. AgCl im angegebenen Beispiel) sind weniger gut geeignet als leichter lösliche (z. B. $Ag_2CrO_4$). Salze mit zu niedrigem Löslichkeitsprodukt sind ungeeignet. Zum Beispiel wäre Silberjodid (AgJ) für die Bestimmung von $NH_3$ ungeeignet, da es sich in Gegenwart von $NH_3$ nicht löst. Silberjodid ist hingegen zur Bestimmung von

Cyanid ($CN^-$) geeignet, da die $Ag(CN)_2^{\ -}$-Komplexe wesentlich fester sind. Das Beispiel zeigt, wie durch eine geeignete Wahl der Feststoffe (Salze) bei der Komplexbildung eine Selektivität (CN-gegenüber $NH_3$) erreicht werden kann.

Das zuletzt beschriebene Beispiel zeigt den Einsatz des Verfahrens gemäß der Erfindung für die Ammoniakbestimmung im Trinkwasser, in dem andere Stoffe in nur vernachlässigbar kleiner Menge vorliegen. Die selektive Bestimmung des Ammoniaks ist daher sehr genau durchführbar.

In einem anderen Fall entsteht in der osmotischen Zelle aus dem Stoff A ein Produkt, das zur selektiven Bestimmung von A führt:

$$A^L \xrightarrow{\text{Membran}} A^Z + F^Z \xrightarrow{K^Z} H^Z + B^Z .$$

Die Reaktion in der Zelle kann, wie angedeutet, durch einen Katalysator ($K^Z$) beschleunigt sein.

Dies führt zu

$H^Z + B^Z \rightarrow$ Reaktionsprodukte (z. B. $C^Z$, $D^Z$, $E^Z$).

Der Katalysator $K^Z$ kann beispielsweise ein Enzym sein.

Ein praktisches Beispiel hierfür ist die Bestimmung von Harnstoff mit Hilfe einer für diesen Stoff permeablen osmotischen Zelle, die Urease als Katalysator und einen Puffer enthält. Der bei der Hydrolyse von Harnstoff in der Zelle gebildete Ammoniak wird mit Hilfe des Puffers in schwer permeables Salz überführt, was die Osmotalität in der Zelle erhöht und zu einer Druckerhöhung führt.

In einem weiteren Fall permeiert ein in der zu untersuchenden Lösung aus dem Stoff A entstehendes Produkt in die osmotische Zelle und reagiert darin mit der Substanz B:

$$A^L + F^L \longrightarrow G^L \xrightarrow{\text{Membran}} G^Z + B^Z .$$

Dies führt zu

$G^Z + B^Z \rightarrow$ Reaktionsprodukte.

Ein praktisches Beispiel hierfür ist die im Ausführungsbeispiel 4 näher beschriebene Bestimmung von

Harnstoff, bei der mittels eines Enzyms ($F^L$) Ammoniak gebildet wird, der in die osmotische Zelle permeiert und dort zu Druckänderungen führt.

Zur Durchführung des Verfahrens wird eine Einrichtung mit einem Behälter und einem Meßkopf mit den im Oberbegriff des Anspruchs 4 angegebenen Merkmalen eingesetzt.

Die Substanz B kann in der Osmometerlösung gelöst sein und wird dann mit dieser in die osmotische Zelle eingefüllt. Sie kann jedoch auch eine feste Substanz sein, die als solche in die osmotische Zelle eingebracht wird. Dabei kann sie als Paste in die Zelle eingegeben werden oder ist Teil der Wandung der Zelle, so daß sie ein integrierendes Bestandteil der Zelle ist. Die Verwendung von Festsubstanzen ist insofern von Vorteil, als sie das Volumen/ Oberflächen-Verhältnis verbessert (und damit die $K_w$ - und $k_s$-Werte) so daß V/A effektiv deutlich kleiner wird als 0,2 mm.

Da sich die in der Osmometerlösung befindliche Substanz B verbraucht, muß die Zelle von Zeit zu Zeit mit frischer Osmometerlösung gefüllt werden. Eine besonders zur Durchführung des Verfahrens gemäß der Erfindung geeignete Ausführungsart der Einrichtung weist daher die in Anspruch 4 angegebenen Merkmale auf. Das Ventilsystem ist dabei so gestaltet, daß das Volumen der Zelle praktisch nicht erhöht wird. Selbstverständlich ist es so auszulegen, daß es einen genügend raschen Durchsatz gestattet.

Je nach dem Volumenanteil des in die Zelle eingebrachten Feststoffs B kann die nichtgefüllte Zelle selbst ein größeres Volumen haben, als dies dem in Anspruch 4 angegebenen Verhältnis von Volumen zu effektiver Oberfläche entspricht.

Die dabei ggf. auftretenden, ungerührten Schichten in der Zelle werden bei der Eichung mit Lösungen vorgegebener Konzentration berücksichtigt.

Zur Durchführung des Verfahrens gemäß der Erfindung ist ferner eine weitere Ausführungsform einer Einrichtung mit Speicherbehältern und einem Meßkopf mit den in Anspruch 5 angegebenen Merkmalen vorgesehen. Auch diese Einrichtung weist die vorgenannten, das Ventilsystem und den in der Zelle befindlichen Feststoff B betreffenden Merkmale auf.

Der Meßkopf gemäß der zuerst genannten Einrichtung besteht im wesentlichen aus der osmotischen Zelle und ist mit "Meßkopf a" bezeichnet. Der Meßkopf der zweiten Einrichtung besteht aus osmotischer Zelle und daran angeschlossenem Behälter und ist mit "Meßkopf b" bezeichnet.

Ausführungsformen des Meßkopfes (a, b) sowie Ausführungsformen der Einrichtung gemäß der Erfindung sind in der Zeichnung schematisch dargestellt und werden im folgenden näher erläutert.

In der Zeichnung sind ferner Eichdiagramme zu Ausführungsbeispielen der Verfahrensweise gemäß der Erfindung wiedergegeben. Es zeigen

| | |
|---|---|
| Figur 1 | einen Meßkopf a, bestehend aus einer osmotischen Zelle mit Druckmeßeinrichtung sowie einer Mikrometerschraube mit Regelstab, |
| Figur 2 | eine Einrichtung mit einem Meßkopf a, bestehend aus einer osmotischen Zelle mit Druckmeßeinrichtung, |
| Figur 3 | einen Meßkopf b, bestehend aus einer osmotischen Zelle und einem an die Zelle angrenzenden Behälter, |
| Figur 4 | Einrichtung mit Meßkopf b gemäß Figur 3 mit automatischer Steuerung des Meßvorganges sowie einer Prozeßsteuerung, |
| Figur 5a und 5b | den Druckverlauf in der osmotischen Zelle während des Meßvorganges, |
| Figuren 6 bis 9 | Eichdiagramme zu den Ausführungsbeispielen 1 bis 4. |

Der in Figur 1 dargestellte Meßkopf a besteht aus einer osmotischen Zelle 1 mit Membran 2, einer Druckmeßeinrichtung 3 mit einem elektrische Signale abgebenden Druckwandler. Außerdem ist eine Einrichtung 4 zur kontrollierten Volumenänderung der osmotischen Zelle 1 vorgesehen, bestehend aus einer Mikrometerschraube mit Regelstab, mit dem eine meßbare Volumenänderung der osmotischen Zelle vorgenommen werden kann. Diese gezielte Volumenänderung, die eine Druckänderung in der osmotischen Zelle zur Folge hat, kann dazu dienen, die Starrheit der osmotischen Zelle über den Druckmeßwandler zu kontrollieren bzw. den Elastizitätsmodul der Zelle zu ermitteln.

Zum schnellen Austausch von Osmometerlösung sind Ventile V1 (Einlaß- und Auslaßventil) vorge sehen, die unmittelbar an die osmotische Zelle 1 angrenzen und deren effektives Volumen praktisch nicht vergrößern.

In Figur 2 ist eine Einrichtung mit einem Meßkopf a der in Figur 1 dargestellten Art, bestehend aus osmotischer Zelle 1 und Druckmeßeinrichtung 3 im Einsatz dargestellt. Eine Einrichtung zur kontrollierten Volumenänderung ist bei dieser Ausführungsform nicht vorgesehen.

Die Behälter 5 und 6 sind wahlweise für die Bezugslösung bzw. für die zu untersuchende Lösung vorgesehen. Die in den beiden Behältern befindlichen Lösungen werden über einen Thermostat auf konstanter Temperatur gehalten.

Zur Bestimmung des Gehaltes an gelöstem Stoff der im Behälter 6 befindlichen Lösung wird der

Meßkopf zunächst zur Einstellung des Arbeitsdruckes $P_O$ in die im Behälter 5 befindliche Bezugslösung getaucht. Nach Einstellen und Ermitteln des Arbeitsdruckes $P_O$ wird der Meßkopf zur Durchführung des Verfahrens in die zu untersuchende Lösung im Behälter 6 getaucht.

Zur Eichung wird anstelle der zu untersuchenden Lösung eine Eichlösung im Behälter 6 eingesetzt.

In Figur 3 ist ein Meßkopf b mit osmotischer Zelle 1, Membran 2 mit Stützgitter 2a und Druckmeßeinrichtung 3 dargestellt, in den ein Behälter 6a zur Aufnahme der Lösungen integriert ist und dessen Gehäuse, bestehend aus den Elementen 7 und 8, aus Stahl gefertigt ist.

Figur 4 zeigt eine Einrichtung mit einem Meßkopf b der in Figur 3 dargestellten Art.

Bei geöffneten Ventilen V1 wird zunächst Osmometerlösung aus Behälter 9 in die osmotische Zelle gefüllt. Zur Einstellung des Arbeitsdruckes wird sodann eine geeignete Bezugslösung (Behälter 10) bei geöffnetem Ventil V2 (die Ventile V1, V3 und V4 sind geschlossen) durch den Behälter 6a eingeleitet, wodurch diese Lösung durch die Membran 2 mit der in der osmotischen Zelle befindlichen Osmometerlösung in Verbindung gebracht wird. Nach Einstellen und Ermitteln des Arbeitsdruckes $P_O$ wird im Anschluß daran bei geöffnetem Ventil V4 (die Ventile V1, V2 und V3 sind geschlossen) aus der Leitung 12 die zu untersuchende Lösung in den Behälter 6a geleitet, worauf sich in der osmotischen Zelle die Druckänderung ergibt, die ein Maß ist für den Gehalt des Stoffes A in der Lösung. Zur Eichung wird über das Ventil V3 bei geschlossenen Ventilen V1, V2 und V4 Eichlösung aus Behälter 11 über den Behälter 6a geleitet.

Die Ventile V1, V3 und V4 sind als fernsteuerbare Absperrorgane ausgebildet, die mit dem Steuergerät I in elektrischer Verbindung stehen. Mittels dieses Steuergerätes I wird in vorbestimmten Zeitabständen zur Einstellung eines Arbeitsdruckes $P_O$ Bezugslösung über das Ventil V2 und danach die zu untersuchende Lösung über das Ventil V4 dem Behälter 6a zugeführt. Darüber hinaus kann in selbstverständlich größeren Zeitabständen mittels des Steuergerätes I das Einspeisen von Eichlösungen über Ventil V3 in den Behälter 6a veranlaßt werden.

Wie aus Figur 4 ferner hervorgeht, werden die elektrischen Ausgangssignale der Druckmeßeinrichtung 3 auf einem Anzeigegerät 13 angezeigt und vom Steuergerät I übernommen. Von einem Steuergerät II, das mit dem Steuergerät I in elektrischer Verbindung steht, wird in Abhängigkeit von den ermittelten Meßwerten der Prozeß gesteuert.

Die Figuren 5a und 5b zeigen den Druckverlauf in der osmotischen Zelle bei der Ammoniakbestimmung mit Silberchromat als Feststoff, wobei die Anfangsneigung für vier verschiedene Konzentrationen bestimmt wurde. Die Bezugslösung war destilliertes Wasser. Die kleine Ammoniakkonzentration bewirkt eine anfängliche, kleine Depression des Druckes, worauf sich sehr bald ein konstanter Druckanstieg ( (dP/dt)t = 0 ) einstellt. In die vier Kurven sind auch die Steigungsdreiecke eingezeichnet, mit deren Hilfe man die Neigungen ermitteln könnte. Druck/Zeit-Kurven der angegebenen Art wurden bei der Eichung aufgenommen (siehe Figur 6).

## Ausführungsbeispiele

Unter Verwendung eines Meßkopfes der in Figur 3 dargestellten Art wurden nachfolgend angegebene Lösungen untersucht. Der Meßkopf bestand aus einem Gehäuse aus Edelstahl (Schichtdicke ca. 0,3 mm). Das Verhältnis des Volumens der osmotischen Zelle zur effektiven Oberfläche der Membran betrug 0,1 mm. Sie war mit einer Paste aus ($Ag_2CrO_4$) und Wasser gefüllt. Die Membran war eine asymmetrische Polyamidmembran (Umkehrosmosemembran) mit einer nominalen Trenngrenze von 50 Dalton. Die Lösungen wurden zur Messung auf 25 °C gehalten.

### Ausführungsbeispiel 1:

Zur Aufstellung der in Figur 6 angegebenen Eichkurve wurden als Eichlösungen wässrige $NH_3$-Lösungen verschiedener Konzentrationen eingesetzt.

Das in die osmotische Zelle permeierte $NH_3$ bewirkt nach der Beziehung

$$Ag_2CrO_4 + 4\ NH_3 = 2\ (Ag\ (NH_3)_2)^+ + CrO_4^{2-}$$

die teilweise Auflösung des Feststoffes $Ag_2CrO_4$. Die dabei entstehenden Ionen sind impermeabel, was zu einer entsprechenden Erhöhung der osmotischen Konzentration und des Druckes in der osmotischen Zelle führt, der in Abhängigkeit von der Zeit gemessen wird (Meßgröße: dP/dt in bar/s) Wie aus Figur 6

hervorgeht, ist dP/dt für genügend kleine Konzentrationen von $NH_3$ ($C_{NH3}$) proportional zur Konzentration von $NH_3$ in der Eichlösung.

Es wurde eine Testlösung (zu untersuchende Lösung) eingesetzt, die 2,50 mM $NH_3$ enthielt. Das gemessene dP/dt von 6.3 x $10^{-5}$ bar/s ergab nach der Eichkurve 2.55 mM $NH_3$. Bezugslösung war destilliertes Wasser.

Ausführungsbeispiel 2:

Zur Aufstellung der in Figur 7 angegebenen Eichkurve wurden als Eichlösung KCN-Lösungen verschiedener Konzentrationen eingesetzt (pH = 8).

Das in die osmotische Zelle permeierte KCN bewirkt nach der Beziehung

$$Ag_2CrO_4 + 4\,KCN = 2\,(Ag\,(CN)_2)^- + 4\,K^+ + CrO_4^{2-}.$$

Die Auflösung des $Ag_2CrO_4$ unter Bildung sehr fester Silbercyanid-Komplexe. Die dabei entstehenden Ionen sind praktisch impermeabel.

Es wurde eine Testlösung eingesetzt, die 0.73 mM $CN^-$ enthielt. Aus dem gemessenen Wert für dP/dt von 8.6 x $10^{-5}$ bar/s ergab sich nach der Eichkurve 0.70 mM $CN^-$. Bezugslösung war destilliertes Wasser.

Ausführungsbeispiel 3:

Es wurde die Konzentration des wenig permeablen Stoffes NaCl bestimmt, der in der osmotischen Zelle eine Umfällung des Feststoffes bewirkt. Zur Aufstellung der in Figur 8 angegebenen Eichkurve wurden wäßrige Eichlösungen mit verschiedenen Konzentrationen eingesetzt.

Die verwendete Membran war auch für einwertige Chlorid-Ionen (wenn auch nur relativ gering) permeabel. Dies läßt sich für eine Chloridbestimmung nutzen. Nach der Gleichung

$$Ag_2CrO_4 + 2\,NaCl = 2\,AgCl + 2\,Na^+ + CrO_4^{2-}$$

wird im Osmometer vorgelegtes, festes $Ag_2CrO_4$, welches wesentlich stärker löslich ist als Silberchlorid, in AgCl umgefällt, wobei auf je 2 $Cl^-$-Ionen ein zweiwertiges $CrO_4^{2-}$ -Ion entsteht.

Dies bewirkt einen Konzentrations-und Druckanstieg im Osmometer, der mit zunehmender Konzentration im Medium zunimmt. Für kleine Konzentrationen von $C_{Cl}$ findet man eine nahezu lineare Abhängigkeit von dP/dt von $C_{Cl}$ .

Als Testlösung wurde eine Lösung von 0.40 mM NaCl verwendet, die nach der in Figur 8 angegebenen Eichkurve 0.38 mM $Cl^-$ ergab.

Ausführungsbeispiel 4:

Es wurde die Konzentration von Harnstoff nach vorheriger enzymatischer Hydrolyse mit Urease und Messung der Konzentration des entstehenden Ammoniaks bestimmt.

In den Eichlösungen (Harnstoff in wässriger Lösung) wurde Harnstoff bei 25°C 10 bis 15 Minuten in Gegenwart von Urease (20 Einheiten/10 ml) hydrolisiert. Der pH der Lösungen betrug danach pH = 8.7 - 9.3 :

$$(NH_2)_2C = O + H_2O \xrightarrow{\text{Urease}} CO_2 + 2\,NH_3.$$

Entsprechend Ausführungsbeispiel 1 wurde der entstehende Ammoniak, der in die osmotische Zelle permeiert, ermittelt. Figur 9 zeigt die Eichkurve für die Harnstoffbestimmung.

Die Testlösung war eine wässrige Lösung mit 0.65 mM Harnstoff. Sie ergab ein dP/dt von 1.37 x $10^{-5}$ bar/s bzw. eine Konzentration des Harnstoffes von 0.64 mM.

## Patentansprüche

**1.** Verfahren zur selektiven Bestimmung des Gehaltes eines in einem Lösungsmittel gelösten Stoffes A

mittels einer eine starre Wandung aufweisenden osmotischen Zelle mit Druckmeßeinrichtung zur Messung des hydrostatischen Druckes in der osmotischen Zelle und mit einer für den Stoff durchlässigen Membran, über die die in der osmotischen Zelle befindliche Osmometerlösung mit der auf den Gehalt des Stoffes zu untersuchenden Lösung in Verbindung gebracht wird, wobei zunächst unter Verwendung einer, mit der Osmometerlösung über die Membran in Verbindung gebrachten Bezugslösung ein Arbeitsdruck $P_O$ eingestellt wird, worauf nach Austausch der Bezugslösung durch die zu untersuchende Lösung aus dem sich hierauf in der osmotischen Zelle einstellenden Druckverlauf der Gehalt des permeablen Stoffes A in der zu untersuchenden Lösung bestimmt wird,
**dadurch gekennzeichnet,**
daß die Osmometerlösung eine in der Bezugslösung und der zu untersuchenden Lösung nicht enthaltene Substanz B enthält, die entweder praktisch unlöslich oder in Bezug auf die Membran impermeabel ist und die mit dem in die osmotische Zelle permeierten Stoff A, einem daraus in der Zelle entstehenden Produkt H oder aus einem in der zu untersuchenden Lösung aus dem Stoff A entstehenden und in die Zelle permeierten Produkt G chemisch reagiert, wobei Reaktionsprodukte C, D und E entstehen, die in der Zelle einen osmotischen Druck entstehen lassen, der sich vom osmotischen Druck des chemisch umgesetzten Anteils der Substanz B unterscheidet, so daß sich eine Druckänderung in der Zelle einstellt, aus der der Gehalt des Stoffes A in der zu untersuchenden Lösung nach Maßgabe von Eichwerten bestimmt wird.

**2.** Verfahren nach Anspruch 1,
**dadurch gekennzeichnet,**
daß nach Austausch der Bezugslösung durch die zu untersuchende Lösung die Anfangsneigung $(\frac{dP}{dt})_t = 0$ der die Druckänderung in der osmotischen Zelle wiedergebenden Druck/Zeit-Kurve ermittelt wird.

**3.** Verfahren nach Anspruch 1 oder 2,
**dadurch gekennzeichnet,**
daß der Gehalt des Stoffes A in der zu untersuchenden Lösung nur so hoch ist, daß der nach dem Austausch der Bezugslösung gegen die zu untersuchende Lösung in die osmotische Zelle gelangende Anteil des Stoffes A oder der daraus entstehenden Produkte G, H schnell chemisch umgesetzt wird und sich der in der Zelle einstellende Druckverlauf allein aus dem Unterschied der osmotischen Drücke des verbrauchten Anteils der Substanz B und der entstehenden Reaktionsprodukte C, D und E ergibt.

**4.** Einrichtung zur selektiven Bestimmung des Gehaltes eines in einem Lösungsmittel gelösten Stoffes A zur Durchführung des Verfahrens nach einem der Ansprüche 1 bis 3 mit einem Behälter (5,6) und einem Meßkopf, der aus einer osmotischen Zelle (1) mit Einlaß- und Auslaßventil (V1) für Zu- und Ableitung der Osmometerlösung sowie mit Druckmeßeinrichtung (3) besteht, die eine starre Wandung aus Metall oder Kunststoff besitzt und deren ebenfalls starre Membran (2) für den Stoff permeabel ist, wobei das Verhältnis des Volumens der osmotischen Zelle zur effektiven Oberfläche der Membran (2) höchstens 0,2 mm beträgt, der Meßkopf in den Behälter (5,6) eintauchbar ist und der Behälter (5,6) wahlweise mit einer Bezugslösung zur Einstellung des Arbeitsdruckes $P_O$, mit der zu untersuchenden Lösung und gegebenenfalls mit Eichlösungen beschickbar ist,
**dadurch gekennzeichnet,**
daß Einlaß- und Auslaßventil (V1) für Zu- und Ableitung der Osmometerlösung so ausgestaltet und angeordnet sind, daß das Volumen der Zelle praktisch nicht erhöht wird und daß die Wandung der osmotischen Zelle (1) mit einer festen Substanz B wenigstens teilweise bedeckt ist und/oder die osmotische Zelle (1) die substanz B enthält, die mit dem in die Zelle (1) gelangten Stoff A oder einem Produkt G, H hiervon chemisch reagiert und dabei Reaktionsprodukte C, D und E bildet, die bei Durchführung des Verfahrens in der Zelle (1) einen osmotischen Druck entstehen lassen, der sich vom osmotischen Druck des chemisch umgesetzten Anteils der Substanz B unterscheidet.

**5.** Einrichtung zur Bestimmung des Gehaltes eines in einem Lösungsmittel gelösten Stoffes A zur Durchführung der Verfahren nach einem der Ansprüche 1 bis 3 mit Speicherbehältern (9,10,11) und einem Meßkopf, der aus einer osmotischen Zelle (1) mit Einlaß- und Auslaßventil (V1) für die Zu- und Ableitung der Osmometerlösung sowie mit Druckmeßeinrichtung (3) und einem integrierten Behälter (6a) besteht, wobei die osmotische Zelle (1) eine starre Wandung aus Metall oder Kunststoff sowie eine ebenfalls starre, für den Stoff permeable Membran (2) besitzt, wobei das Verhältnis des Volumens der osmotischen Zelle zur effektiven Oberfläche der Membran höchstens 0,2 mm beträgt und wobei der integrierte Behälter (6a) über die Membran (2) mit der osmotischen Zelle (1) in Verbindung steht und

mit Zu- und Ableitung für die Bezugslösug zur Einstellung des Arbeitsdruckes $P_O$, für die zu untersuchende Lösung sowie gegebenenfalls für eine Eichlösung versehen ist und die Zu- und Ableitung des integrierten Behälters (6a) sowie der Behälterinnenraum so ausgebildet sind, daß die in ihn eingespeisten Lösungen möglichst schnell in den integrierten Behälter (6a) des Meßkopfes einfüllbar sind, wobei mit der Zuleitung für den integrierten Behälter (6a) des Meßkopfes Speicherbehälter (10) für die Lösung zur Einstellung des Arbeitsdruckes $P_O$ in Verbindung stehen und ferner ein mit der Zuleitung für den integrierten Behälter (6a) des Meßkopfes in Verbindung stehender, die zu untersuchende Lösung enthaltender Aufnahmebehälter oder eine Rohrleitung (12) vorgesehen sind,
**dadurch gekennzeichnet,**
daß Einlaß- und Auslaßventil (V1) für Zu- und Ableitung der Osmometerlösung so ausgestaltet und angeordnet sind, daß das Volumen der Zelle praktisch nicht erhöht wird und daß die Wandung der osmotischen Zelle (1) mit einer festen Substanz B wenigstens teilweise bedeckt ist und/oder die osmotische Zelle (1) die Substanz B enthält, die mit dem in die Zelle (1) gelangten Stoff A oder einem Produkt G, H hiervon chemisch reagiert und dabei Reaktionsprodukte C, D und E bildet, die bei Durchführung des Verfahrens in der Zelle (1) einen osmotischen Druck entstehen lassen, der sich vom osmotischen Druck des chemisch umgesetzten Anteils der Substanz B unterscheidet.

## Claims

**1.** Method for selectively determining the content of a substance A dissolved in a solvent, using a rigid-walled osmotic cell with a pressure measuring device for measuring the hydrostatic pressure in the osmotic cell and with a diaphragm which is permeable to the substance and via which the osmometer solution in the osmotic cell is brought into contact with the solution of which the content of the substance is to be investigated, said method comprising first using a reference solution contacted with the osmometer solution via the diaphragm to set a working pressure $P_0$, whereupon after exchanging the reference solution for the solution under investigation the content of permeable substance A in the solution under investigation is determined from the pressure profile now produced in the osmotic cell,
characterised in that the osmometer solution contains a substance B, not contained in the reference solution and the solution under investigation, which is either virtually insoluble or is impermeable with respect to the diaphragm and which reacts chemically with substance A which has permeated into the osmotic cell, a product H produced therefrom in the cell or from a product G produced in the solution under investigation from substance A and having permeated into the cell, thereby producing reaction products C, D and E, which give rise to an osmotic pressure in the cell that is different from the osmotic pressure of the chemically reacted component of substance B, thus creating a pressure change in the cell from which the content of substance A in the solution under investigation is determined on the basis of calibration values.

**2.** Method according to claim 1,
characterised in that after the reference solution has been exchanged for the solution under investigation, the initial slope $(\frac{dp}{dt})$ t = 0 of the pressure/time curve giving the pressure change in the osmotic cell is determined.

**3.** Method according to claim 1 or 2,
characterised in that the content of substance A in the solution under investigation to only high enough for the component of substance A, or of products G, H resulting therefrom, passing into the osmotic cell after exchanging the reference solution for the solution under investigation to be quickly reacted chemically and for the pressure profile now produced in the cell to result solely from the difference in osmotic pressures of the spent component of substance B and the resulting reaction products C, D and E.

**4.** Apparatus for selectively determining the content of a substance A dissolved in a solvent, for carrying out the method according to one of claims 1 to 3, having a container (5, 6) and a measuring head which consists of an osmotic cell (1) with inlet and outlet valve (V1) for inflow and outflow of the osmometer solution along with a pressure measuring device (3) having a rigid metal or plastic wall and the diaphragm (2) of which, likewise rigid, is permeable to the substance, the ratio of the volume of the osmotic cell to the effective surface area of the diaphragm (2) being not more than 0.2 mm, the measuring head being immersible in the container (5, 6) and the container (5, 6) being adapted to be filled, as required, with a reference solution for setting the working pressure $P_0$, with the solution under

investigation, and if appropriate with calibrating solutions,
characterised in that the inlet and outlet valves (V1) for inflow and outflow of the osmometer solution are so designed and arranged that the volume of the cell is practically not increased, and that the wall of the osmotic cell (1) is at least partially covered by a solid substance B and/or the osmotic cell (1) contains substance B which reacts chemically with substance A which has passed into the cell (1), or with a product G, H thereof, to form reaction products C, D and E, which upon implementation or the method give rise to an osmotic pressure in the cell (1) that is different from the osmotic pressure of the chemically reacted component of substance B.

**5.** Apparatus for determining the content of a substance A dissolved in a solvent, for carrying out the methods according to one of claims 1 to 3, having storage containers (9, 10, 11) and a measuring head which consists of an osmotic cell (1) with inlet and outlet valve (V1) for the inflow and outflow of the osmometer solution and with a pressure measuring device (3) and an integrated container (6a), the osmotic cell (1) having a rigid metal or plastic wall as well as a diaphragm (2), likewise rigid, and permeable to the substance, the ratio of the volume of the osmotic cell to the effective surface area of the diaphragm being not more than 0.2 mm and the integrated container (6a) communicating with the osmotic cell (1) via the diaphragm (2) and being equipped with an inflow and outflow for the reference solution to set the working pressure $P_0$, for the solution under investigation and also, if appropriate, for a calibrating solution, and the inflow and outflow of the integrated container (6a) and the interior of the container are so constructed that the solutions fed into it can be filled as fast as possible into the integrated container (6a) of the measuring head, and storage containers (10) for the solution to set the working pressure $P_0$ communicating with the inflow for the integrated container (6a) of the measuring head, and there additionally being provided a receiving container for the solution under investigation, communicating with the inflow for the integrated container (6a) of the measuring head, or else a pipe (12),
characterised in that the inlet and outlet valves (VI) for inflow and outflow of the osmometer solution are so designed and arranged that the volume of the cell is practically not increased, and that the wall of the osmotic cell (1) is at least partially covered by a solid substance B and/or the osmotic cell (1) contains substance B which reacts chemically with substance A which has passed into the cell (1) or with a product G, H thereof, to form reaction products C, D and E which upon implementation of the method give rise to an osmotic pressure in the cell (1) that is different from the osmotic pressure of the chemically reacted component of substance B.

## Revendications

**1.** Procédé de détermination sélective de la concentration d'une substance A dissoute dans un solvant, au moyen d une cellule osmotique comportant une paroi rigide, avec un dispositif de mesure de pression servant à mesurer la pression hydrostatique de la cellule osmotique et avec une membrane perméable pour la substance, au moyen de laquelle la solution osmométrique située dans la cellule osmotique est mise en contact avec la solution dont on veut analyser la concentration de la substance, procédé dans lequel on règle d'abord une pression de marche $P_0$ en utilisant une solution de référence mise en contact avec la solution osmométrique à travers la membrane et ensuite, après le remplacement de la solution de référence par la solution a analyser, on détermine la concentration de la substance perméable A de la solution à analyser, à partir de l'évolution de pression qui s'établit après cela dans la cellule osmotique, **caractérisé en ce que** la solution osmométrique contient une substance B qui n'est pas contenue dans la solution de référence ni dans la solution à analyser, qui est pratiquement insoluble ou imperméable par rapport à la membrane et qui réagit chimiquement avec la substance A qui a pénétré dans la cellule, ou avec un produit formé à partir de cette substance dans la cellule, ou avec un produit G formé a partir de la substance A dans la solution à analyser et qui a pénétré dans la cellule, cette réaction chimiqie donnant formation aux produits de réaction C, D et E qui créent une pression osmotique dans la cellule, laquelle pression est différente de la pression osmotique de la proportion de substance B ayant réagi chimiquement, de sorte qu'un changement de pression s'établit dans la cellule, à partir duquel on détermine la concentration de la substance A dans la solution à analyser, en fonction de valeurs d'étalonnage.

**2.** Procédé selon la revendication 1, caractérisé en ce qu'après le remplacement de la solution de référence par la solution à analyser, on détermine la pente initiale

$$\frac{dP}{(dt)t} = 0$$

de la courbe pression/temps indiquant le changement de pression dans la cellule osmotique.

3. Procédé selon la revendication 1 ou 2, caractérisé en ce que la concentration de la substance A dans la solution à analyser est seulement élevée à un point tel qu'après le remplacement de la solution de référence par la solution à analyser, la proportion de substance A ayant pénétré dans la cellule osmotique, ou les produits G, H formés à partir de cette substance, subissent rapidement une réaction chimique, et l'évolution de pression s'établissant dans la cellule résulte uniquement de la différence entre la pression osmotique de la proportion de substance B consommée et la pression osmotique des produits de réaction C, D et E formés.

4. Dispositif pour la détermination sélective de la concentration d'une substance A dissoute dans un solvant, pour la mise en oeuvre du procédé selon une des revendications 1 à 3, comportant un réservoir (5, 6) et une tête de mesure qui est formée d'une cellule osmotique (1) comportant des vannes d'entrée et de sortie (V1) pour amener ou évacuer la solution osmométrique, ainsi qu'un dispositif de mesure de pression (3), qui possède une paroi rigide en métal ou en matière plastique et dont la membrane (2), également rigide, est perméable pour la substance, dispositif dans lequel le rapport volume de la cellule osmotique sur surface efficace de la membrane (2) est au plus de 0,2 mm, la tête de mesure peut être immergée dans le réservoir (5, 6) et ledit réservoir (5, 6) peut être alimenté, au choix, avec une solution de référence pour régler la pression de marche $P_0$, ou avec la solution à analyser, ou éventuellement des solutions d'étalonnage, caractérisé en ce que les vannes d'entrée et de sortie (V1) pour amener ou évacuer la solution osmométrique sont réalisées et disposées d'une manière telle que le volume de la cellule n'augmente pratiquement pas et que la paroi de la cellule osmotique (1) est recouverte au moins partiellement d'une substance solide B et/ou la cellule osmotique (1) contient la substance B qui réagit chimiquement avec la substance A qui a pénétré dans la cellule (1), ou avec un produit G, H formé à partir de ladite substance A, et forme ainsi des produits de reaction C, D et E qui, lors de la mise en oeuvre du procédé, produisent une pression osmotique dans la cellule (1), qui est différente de la pression osmotique de la proportion de substance B ayant réagi chimiquement.

5. Dispositif pour la détermination sélective de la concentration d'une substance A dissoute dans un solvant, pour la mise en oeuvre des procédés selon une des revendications 1 à 3, comportant des réservoirs (9, 10, 11) et une tête de mesure qui est formée d'une cellule osmotique (1) avec des vannes d'entrée et de sortie (V1) pour amener ou évacuer la solution osmométrique, ainsi qu'un dispositif de mesure de pression (3) et un réservoir intégré (6a), la cellule osmotique (1) possédant une paroi rigide en métal ou en matière plastique, ainsi qu'une membrane (2), également rigide, qui est perméable pour la substance, dispositif dans lequel le rapport volume de la cellule osmotique sur surface efficace de la membrane est au plus de 0,2 mm, et dans lequel le réservoir intégré (6a) est relié à la cellule osmotique (1) par l'intermédiaire de la membrane (2) et est pourvu de conduites d'amenée et d'évacuation pour la solution de référence pour régler la pression de marche $P_0$, ou pour la solution à analyser ou éventuellement pour une solution d'étalonnage, et les conduites d'amenée et d'évacuation du réservoir intégré (6a), ainsi que l'intérieur du réservoir, sont réalisés d'une manière telle que les solutions amenées dans ce réservoir peuvent remplir le réservoir intégré (6a) de la tête de mesure aussi vite que possible, des réservoirs (10) pour la solution servant à régler la pression de marche $P_0$ étant reliés à la conduite d'amenée du réservoir intégré (6a) de la tête de mesure, et il est prévu en outre un réservoir de réception ou une tuyauterie (12), qui est relié à la conduite d'amenée du réservoir intégré (6a) de la tête de mesure et contient la solution à analyser, caractérisé en ce que les vannes d'entré et de sortie (V1) pour amener ou évacuer la solution osmométrique sont réalisées et disposées d'une manière telle que le volume de la cellule n'augmente pratiquement pas et que la paroi de la cellule osmotique (1) est recouverte au moins partiellement d'une substance solide B et/ou la cellule osmotique (1) contient la substance B qui réagit chimiquement avec la substance A qui a pénétré dans la cellule (1), ou avec un produit G, H formé à partir de ladite substance A, et forme ainsi des produits de réaction C, D et E qui, lors de la mise en oeuvre du procédé, produisent une pression osmotique dans la cellule (1), qui est différente de la pression osmotique de la proportion de substance B ayant réagi chimiquement.

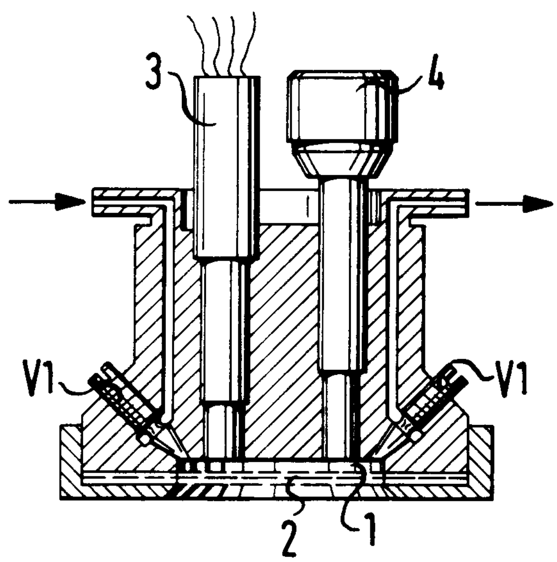


FIG. 1

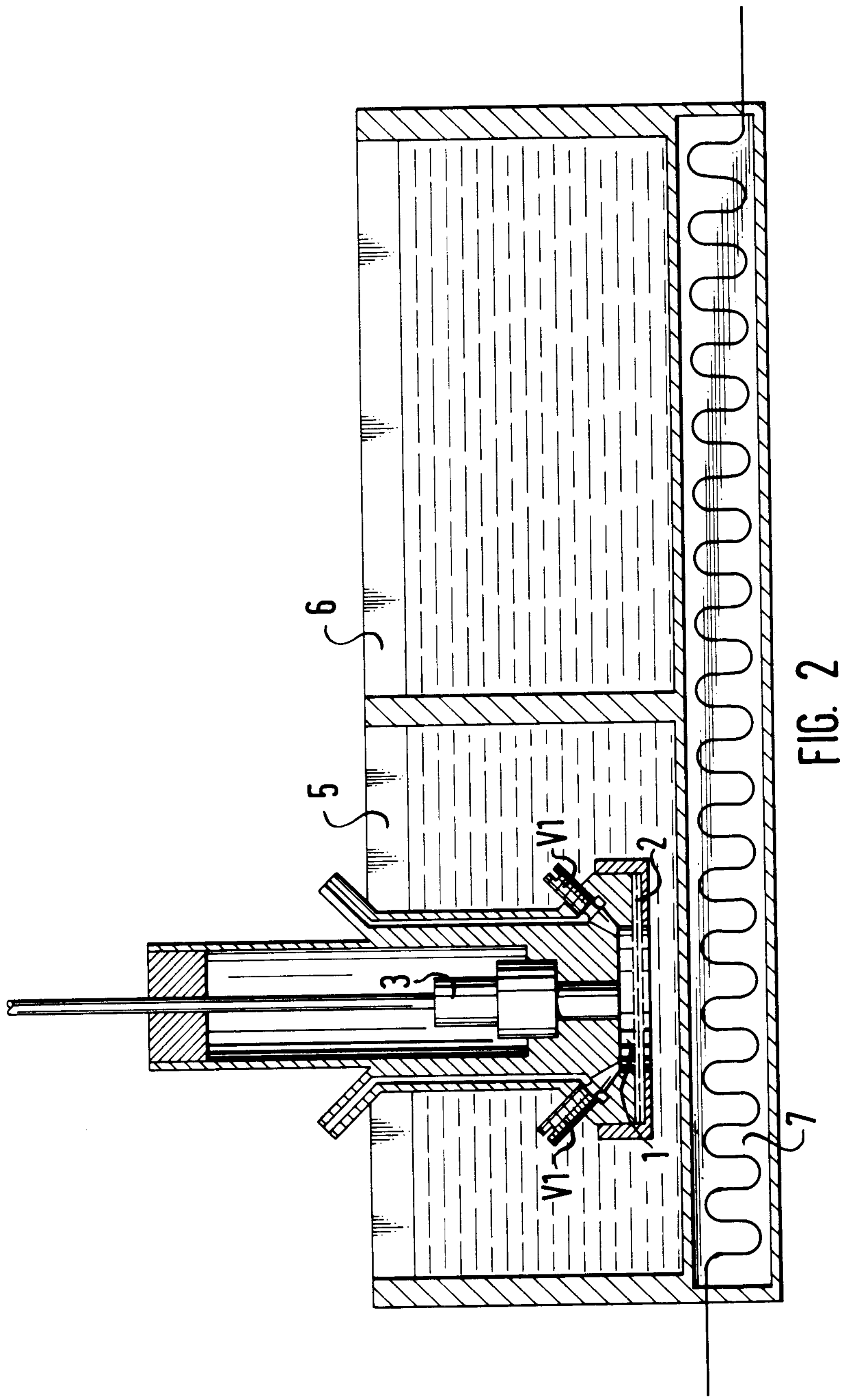


FIG. 2

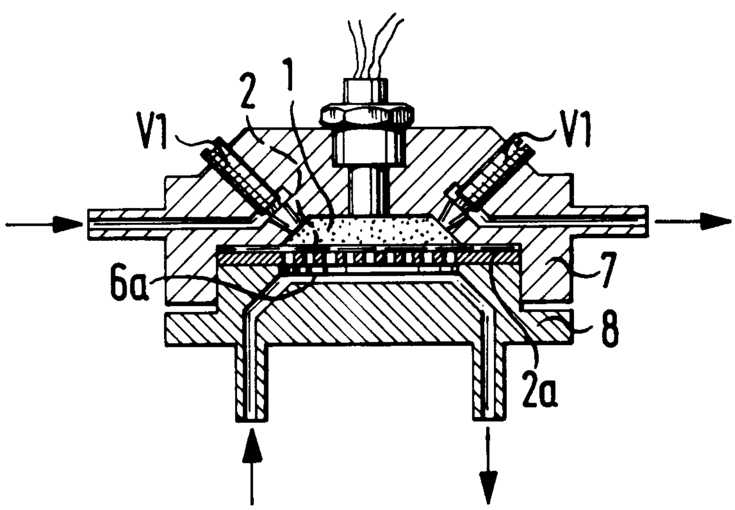


FIG. 3

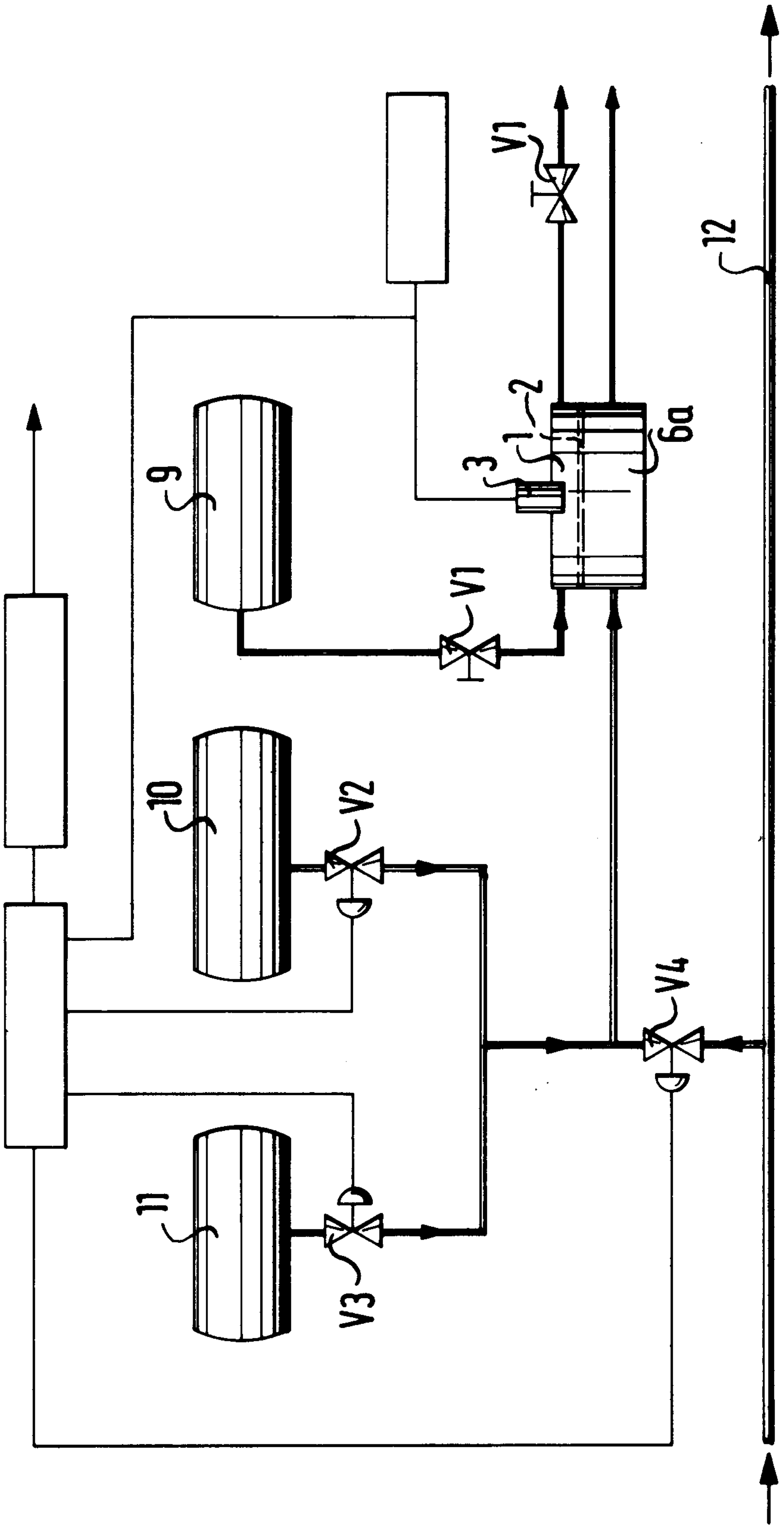


FIG. 4

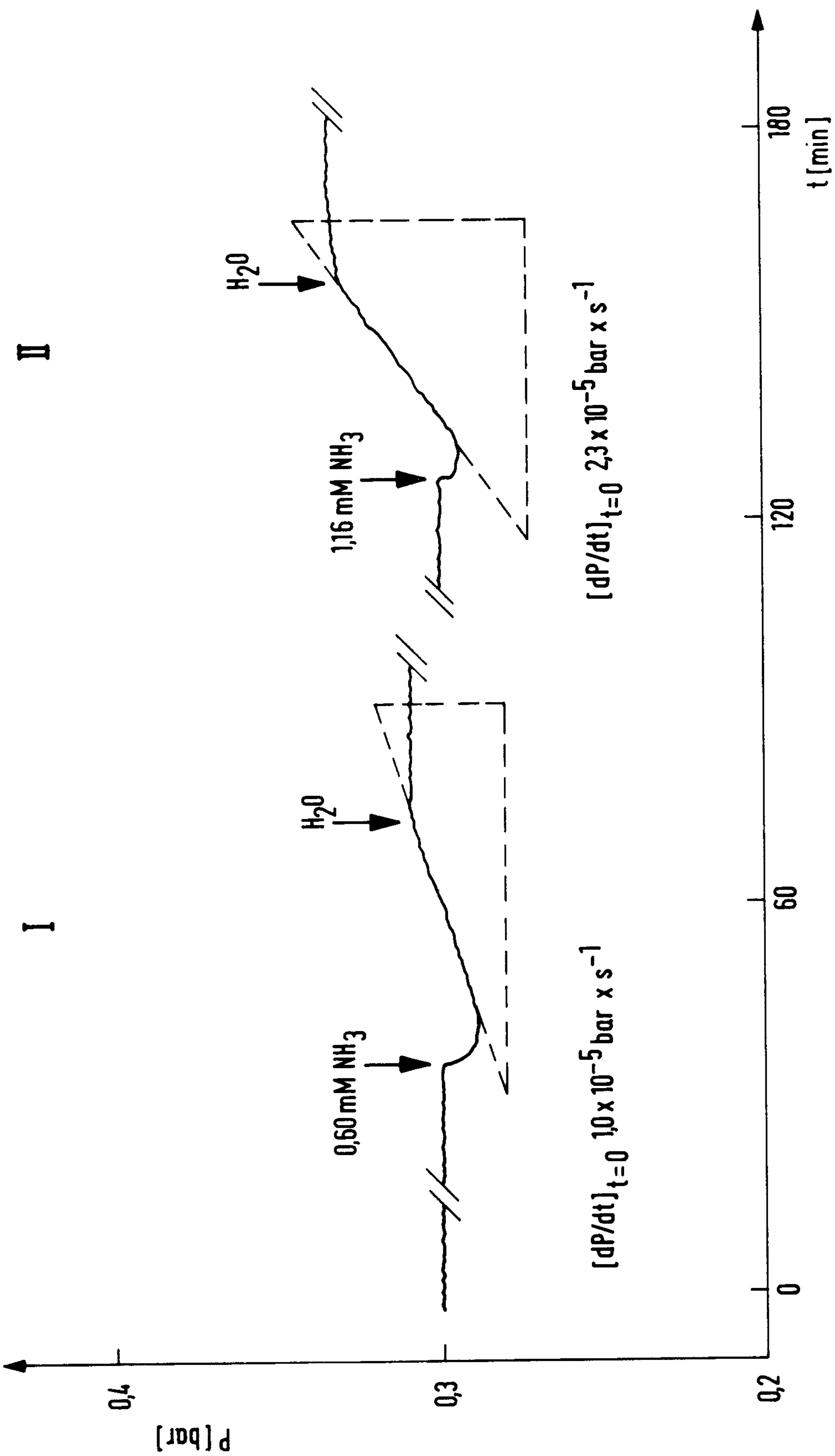
P [bar]
0,4
0,3
0,2
0
60
120
180
t [min]
I
II
0,60 mM $NH_3$
$H_2O$
1,16 mM $NH_3$
$H_2O$
$[dP/dt]_{t=0}$ $1{,}0 \times 10^{-5}$ bar x $s^{-1}$
$[dP/dt]_{t=0}$ $2{,}3 \times 10^{-5}$ bar x $s^{-1}$

FIG. 5a

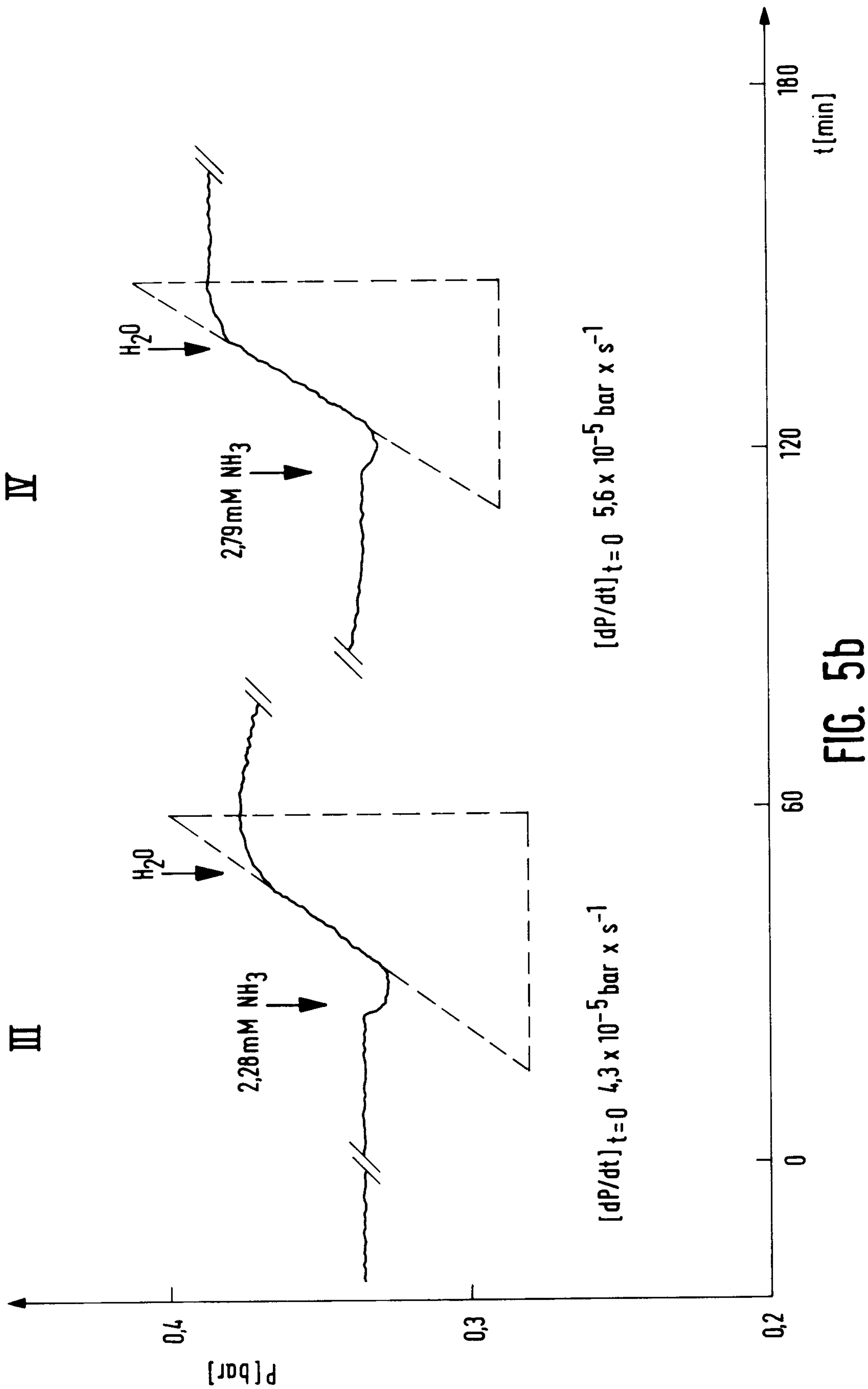

III
IV
2,28mM $NH_3$
$H_2O$
2,79mM $NH_3$
$H_2O$
$[dP/dt]_{t=0}$ $4,3 \times 10^{-5}$ bar x $s^{-1}$
$[dP/dt]_{t=0}$ $5,6 \times 10^{-5}$ bar x $s^{-1}$
P[bar]
0,4
0,3
0,2
0
60
120
180
t[min]


FIG. 5b

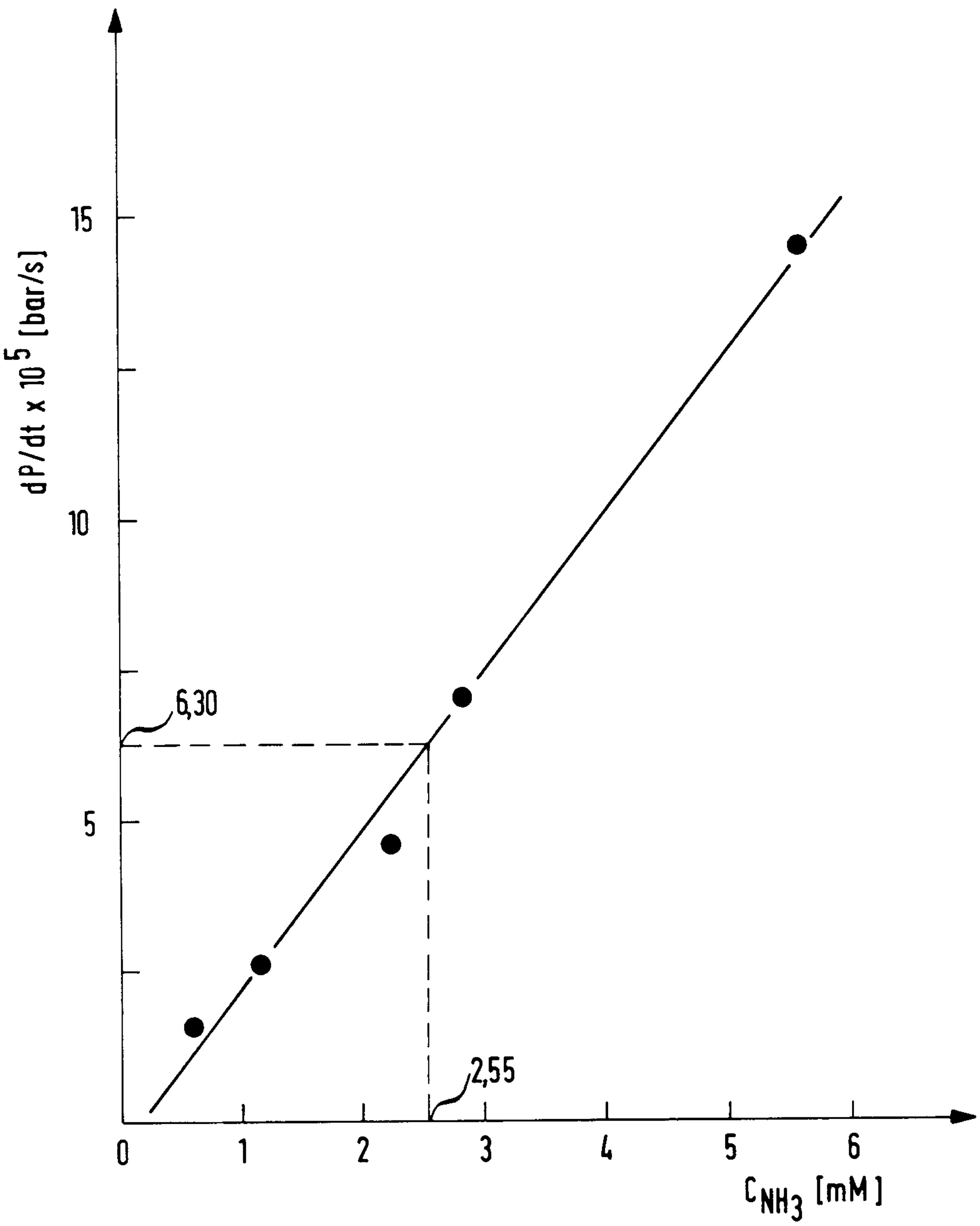


FIG. 6

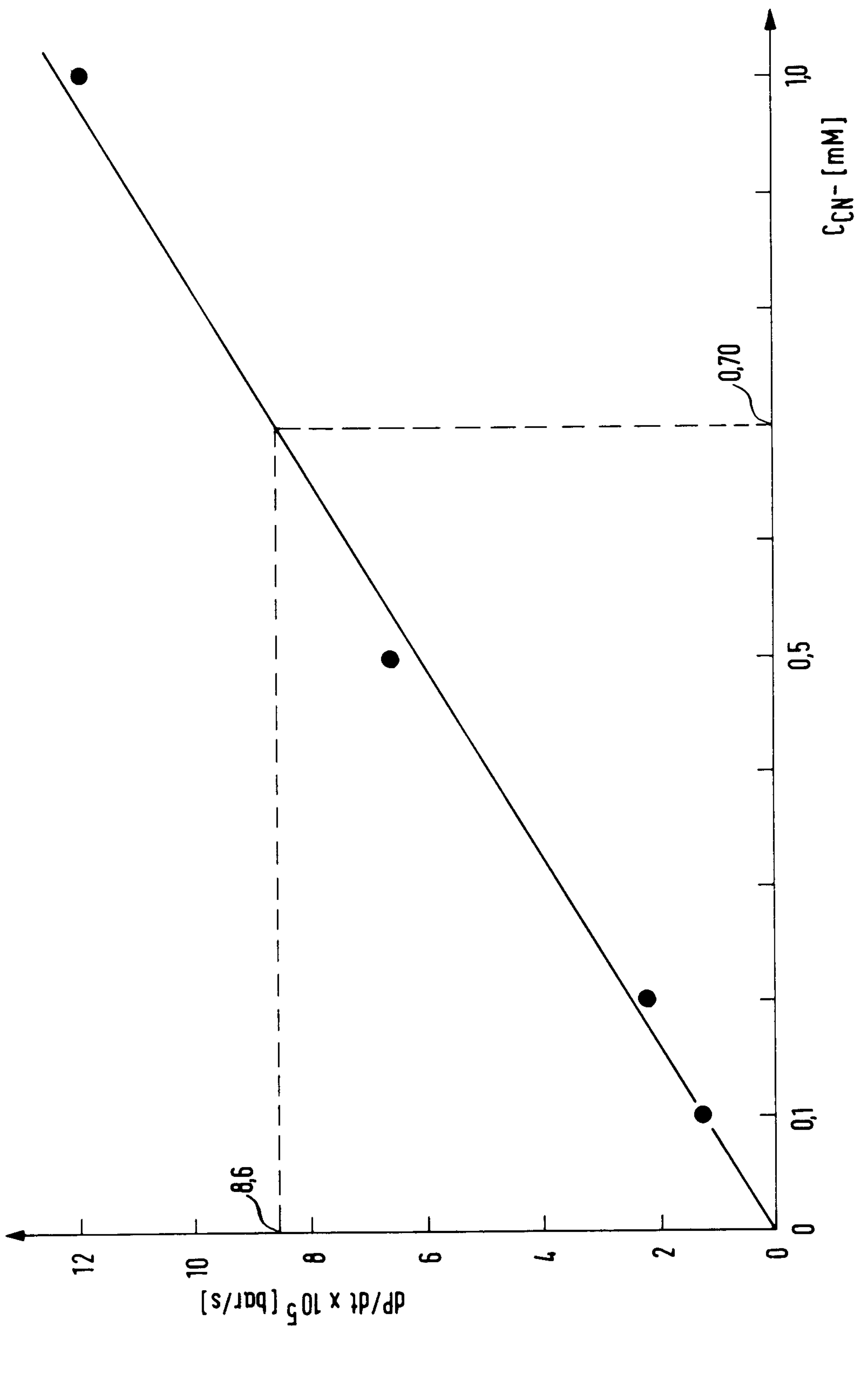


FIG. 7

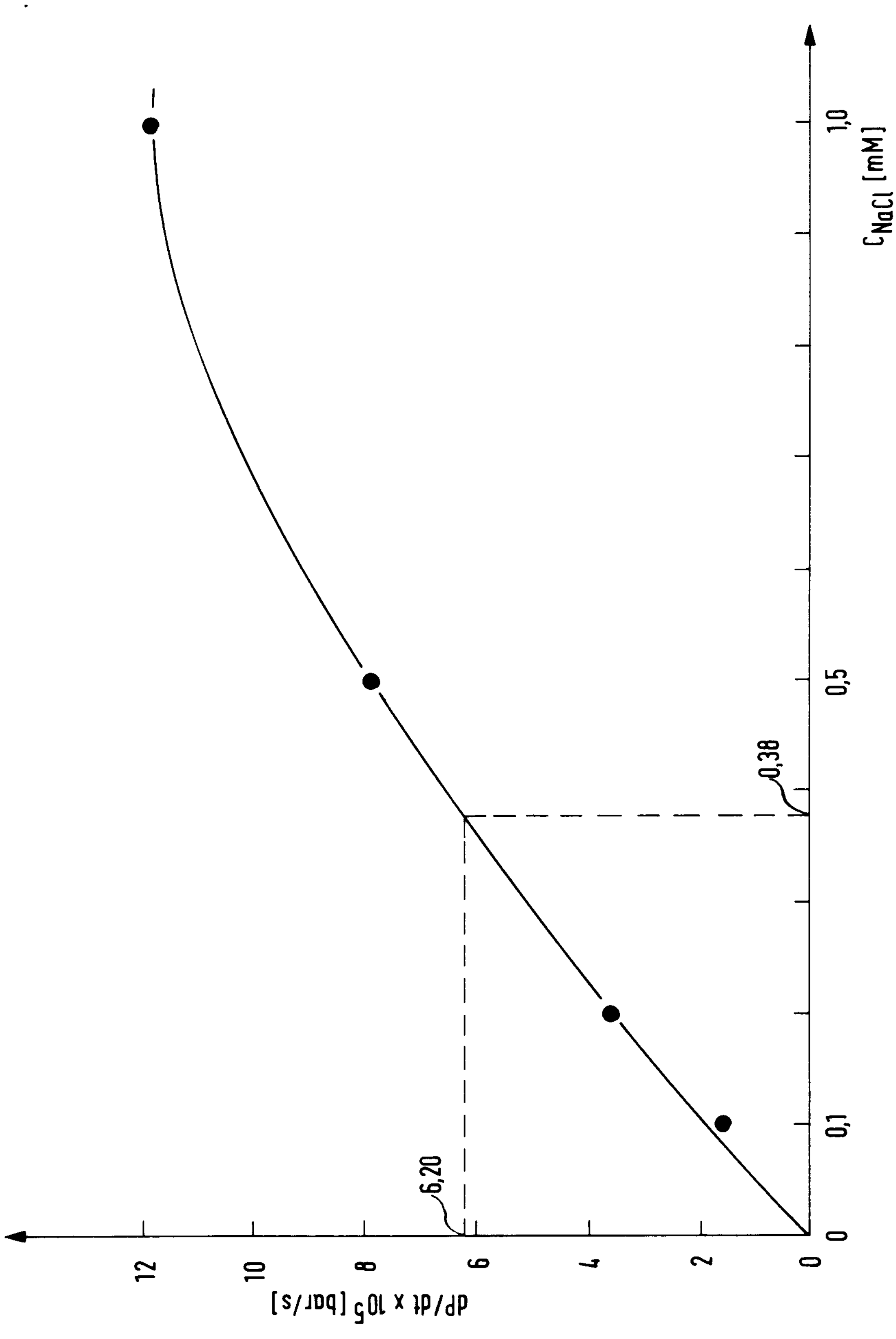


FIG. 8

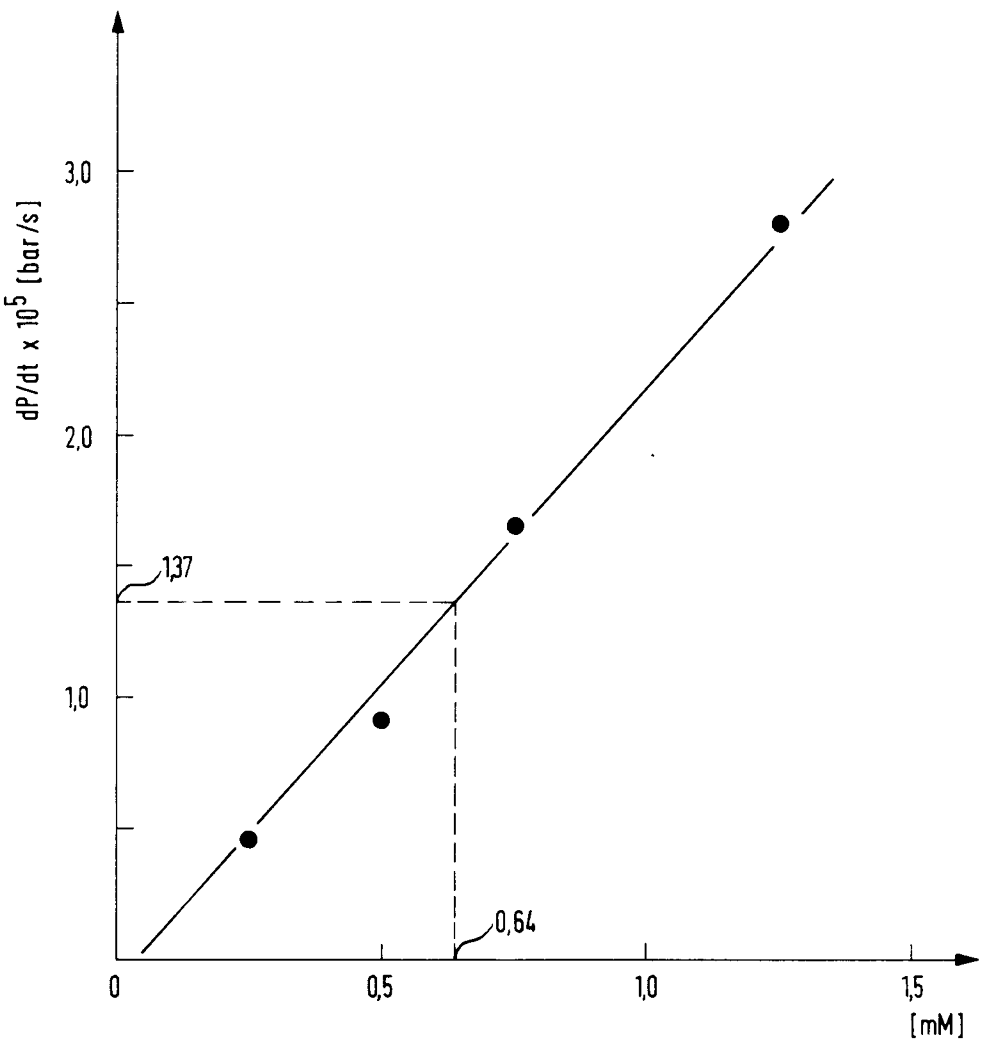


FIG. 9